# EUROPEAN PATENT APPLICATION

(11) **EP 1 211 616 A2**
(43) Date of publication of application: **05.06.2002**
(21) Application number: 01309964.3
(22) Date of filing: 28.11.2001
(51) Int. Cl.: G06F 17/30

(54) **Data storage and retrieval system**

(30) Priority: 29.11.2000 GB 0029159
(71) Applicant: Calaba Limited, Rothwell, Northamptonshire NN14 6JR (GB)
(72) Inventor: Davis, Ian, Rothwell, Northampshire NN14 6JR (GB); Carlyle, James, Brookes Market, London EC1N 7SX (GB)
(74) Representative: Ertl, Nicholas Justin

(57) **Abstract**

A data classification method, data structure and associated systems are described. A number of hierarchical indices are defined and linked to data stored in a database. Data elements are linked to applicable ones of the indices in dependence on characteristics of the data. The link is with the lowest applicable entry in the respective index.

## Description

### Field of the invention

The present invention relates to a data storage and retrieval system that is applicable to use in search engines on the Internet and is most applicable to use in search engines for mobile Internet users.

### Background to the invention

With the ever-expanding number of electronic information sources, particularly on the World Wide Web, searching facilities have been developed to provide searching capabilities to enable users to hunt for information of interest in large collections of electronic documents. Such search engines search the pages of electronic documents such as Web pages, word-processed documents, presentations and similar electronic files for keywords. Search engines may also attempt to index the content or subject electronic files to allow these to be searched. These processes are typically automated.

Examples of such search engines include AltaVista, Lycos and others. These search engines do an effective job of finding many possible matches based on keywords provided by the user. However, the number of matches is often quite large and it is difficult to locate those few documents of particular interest within such a collection of matching documents.

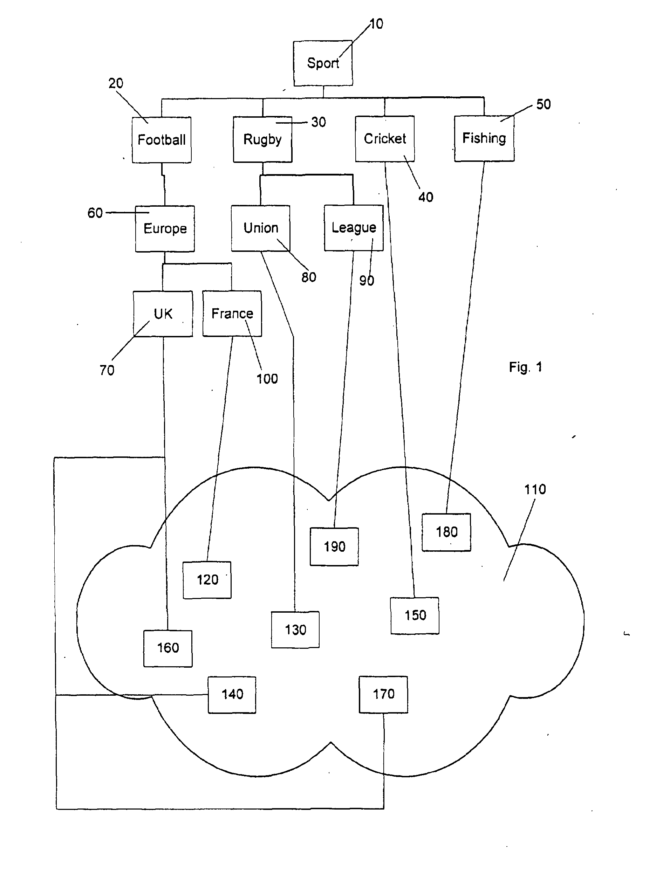

Many search engine providers also provide so called 'web directories' in conjunction or separately to their search engines. These are an attempt to address the problem of too many matches being found by keyword searches. The web directories define a category-based hierarchy classifying the data held by the search engine's database into categories and sub-categories. An example of a portion of a web directory is shown in Figure 1. A root node 10 defines the highest level of the shown hierarchy but could itself be linked to higher nodes. The root node 10 relates to sport and its child nodes 20-50 relate to particular sports or sports types. In turn, child nodes 60-100 may relate to sub types of sports, particular clubs or associations or geographical areas. Data 120-190 within the search engine's database 110 is classified by linking it to the lowest possible relevant node within the hierarchy. For example, a website 120 on a French football club would be linked to node 100. An interface is provided that allows users to navigate the category/sub-category hierarchy corresponding to the nodes and browse the entries for that particular category or sub-category.

The Web directory may be linked to allow keyword searching of its entries. A keyword search can be executed at any level within the hierarchy. However, the search is restricted to the data classified as belonging to the selected node of the hierarchy or below. For example, a search executed at node 20 for 'fixtures' will return all data having the keyword 'fixture' linked to nodes 20 or 60, 70 or 100 whilst a search executed at node 100 for 'fixtures' would only return data having that keyword linked to that node as it has no child nodes.

Whilst such directories are useful to locate a few matching documents, their utility is restricted. First, the act of classifying a rapidly growing collection of documents into specific categories is a computationally difficult task that often must be performed or supervised by a human operator. It can be seen that the success or failure of a directory rests on its classification structure. Whilst general-purpose classification structures can be implemented fairly simply they quickly get out of hand. In the example illustrated with reference to Figure 1 it can be seen that the geographical location classification would be repeated a large number of times across the hierarchy. Navigating the category/sub-category hierarchy itself is a very inflexible mechanism of focusing the search. Not only does it rely on the classification structure being intuitive enough for the user to find the appropriate category to search, the database-based search does not allow users to pose keyword-based queries to locate documents classified into multiple categories. As a consequence of these limitations, documents that can be located using the web directories may be miss-classified so that search results may not include a number of existing documents that would be of interest to the user. In addition, the hierarchy is likely to become so complicated over time that most users will become frustrated with not being able to find the correct category or with the time taken to navigate to the desired hierarchy level that they may give up and use another directory and/or search engine.

### Statement of invention

According to a first aspect of the present invention, there is provided a data classification method comprising the steps of:
defining a plurality of hierarchical indices;
storing data in a database; and,
linking the stored data in the database to applicable ones of the indices in dependence on characteristics of the data, the link being with a lowest applicable entry within the hierarchical indices.

According to a second aspect of the present invention, there is provided a data classification data structure comprising a database of data items and a plurality of indices having a hierarchy of entries, each data item being linked to the lowest applicable entry within applicable ones of the indices in dependence on characteristics of the data.

By classifying data and indexing it in a number of different, possibly orthogonal, indices, each of which is independently searchable but which may be combined with the other indices, a powerful searchable data structure is created that can be simply accessed and used to perform and adjust wide ranging searches. The data structure is easily expandable but at the same time is controlled so that expansion is in a limited, logical and methodical manner and not dependent on the operator adding new categories or levels of detail.

Each index may be a hierarchy of categories and sub-categories.

The stored data may comprise references to electronic data, the reference including a network identifier for accessing the data. Preferably, the electronic data comprises World Wide Web pages and the reference to the data includes the Web page's Universal Resource Locator, URL.

According to a third aspect of the present invention, there is provided a computer implemented search engine comprising a server arranged to access a data classification data structure, the server being operative to accept settings for a number of the indices and a search term, wherein the server is arranged to access the data classification structure to generate a set of data references from those in the data classification structure in dependence on the settings of the indices and to execute a search using the search term on the set of data references.

According to a fourth aspect of the present invention, there is provided a computer implemented data access system comprising a server arranged to access a data classification structure, the server being operative to accept settings for a number of the indices, wherein the server is arranged to output data references from the data classification structure in dependence on the settings of the indices.

The server may be arranged to generate the set of data references by determining the intersection of data references associated with each index entry corresponding to its respective index setting. The server may be arranged to generate the set of data references by determining the intersection of data references associated with each index entry, or being a child of that index entry, corresponding to its respective index setting.

The server may be arranged to generate the set of data references by determining the union of data references associated with each index entry corresponding to its respective index setting. The server may be arranged to generate the set of data references by determining the union of data references associated with each index entry, or being a child of that index entry, corresponding to its respective index setting.

The server may be arranged to host a World Wide Web site on the Internet, the World Wide Web site including an interface operative to accept the settings for a number of the indices and the search term, wherein the server is arranged to output the data references as a World Wide Web page.

According to a fifth aspect of the present invention, there is provided an intermediate data serving system linkable to a data access system and having data stored in a data classification structure, wherein upon being accessed by said link, the system is operative to determine characteristics of the data access system and to output selected ones of said data associated with index entries determined as being relevant to said characteristics.

The intermediate data serving system sits between two systems and offers the power of the above data classification data structure basing the search terms on characteristics of the previously viewed site and page. In this manner suggestions as to sites and pages suitable for the use and corresponding to that which he has already viewed are offered without further search or navigation being required.

Characteristics of the data access system may include selected ones of: the subject of the data access system; the subject of the data accessed in the data access system prior to accessing of the link; and, a location associated with the data accessed in the data access system.

The data may comprise references to electronic data, each reference including a network identifier for accessing the electronic data. The electronic data may comprise World Wide Web pages and the reference to the data includes the Web page's Universal Resource Locator, URL.

According to a sixth aspect of the present invention, there is provided a method of classifying pages of a Web site to portions of a hierarchical data structure of categories and sub-categories corresponding to said hierarchy, the method comprising the steps of:
traversing the Web site;
recording characteristics of associations between pages of the Web site;
comparing the recorded characteristics with the hierarchical data structure, wherein if a predetermined number of the recorded characteristics for a page and associated pages match a portion of the hierarchical data structure, the page is classified against the portion of the hierarchical data structure.

Associations may comprise hypertext links and the characteristics include the text associated with the hypertext links.

The comparison may be made in dependence on all surrounding pages.

The method may be applied to the above mentioned data classification data structure, in which case the comparison may be made against each index, wherein if a page is classified against an index, a reference to the page is generated and stored and linked to the index entry corresponding to the portion of the hierarchical data structure.

### Brief description of the drawings

An example of the present invention will now be described in detail with reference to the accompanying drawings in which:
Figure 1 is a schematic diagram illustrating a portion of the hierarchy underlying a current web directory;
Figure 2 is a schematic diagram illustrating a portion of the hierarchy according to an embodiment of the present invention;
Figure 3 is a schematic diagram of a computer system implementing a data retrieval system according to another embodiment of the present invention;
Figure 4 is a schematic diagram of a system according to another embodiment of the present invention that utilises the hierarchy of Figure 2; and,
Figures 5a and 5b are schematic diagrams illustrating the operation of a classification system according to another aspect of the present invention.

### Detailed description

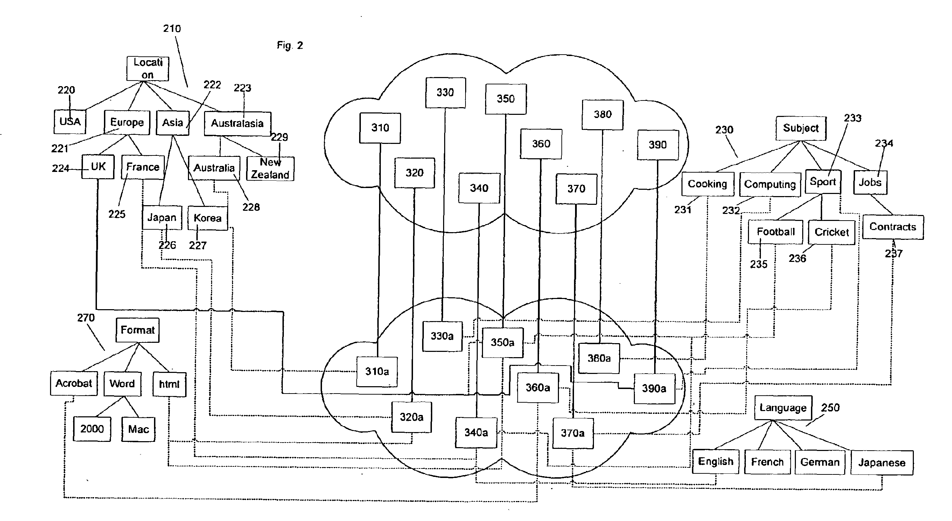

Figure 2 is a schematic diagram illustrating a portion of a hierarchical data structure 200 according to an embodiment of the present invention. In this particular instance, the data elements 310-390 classified by the data structure are from the World Wide Web and includes web pages, word-processed documents, presentations and similar electronic data files. A reference 310a-390a to each data element is held in a central database 300.

The data structure includes a plurality of hierarchical indices 210, 230, 250, 270. Each index corresponds to data that is substantially independent. In this particular example there are indices for geographical location 210, subject 230, language of the data 250 and content type 270. Each index 210, 230, 250, 270 has a tree structure and is divided systematically into increasingly narrow sub-categories, each corresponding to a leaf node in the tree. For example, the geographical location index 210 includes continent sub-categories (leaf nodes 220-223) that in turn include country sub-categories (leaf nodes 224-229). It will be appreciated that the country sub-categories may in turn have region, county or town sub-categories and so on. A similar tree of sub-categories is built up for each of the other indices 230, 250, 270. Obviously, the level of granularity is dependent on the breadth and depth of sub-categories in the tree. The breadth and depth of sub-categories is therefore selected according to the amount of references to be classified and the desired granularity it is desired to offer.

Each reference to a data element 310a-390a is associated with at least one of the indices 230-270. However, in practice each reference is associated with all applicable indices. A reference is associated with the lowest applicable leaf node of the respective index.

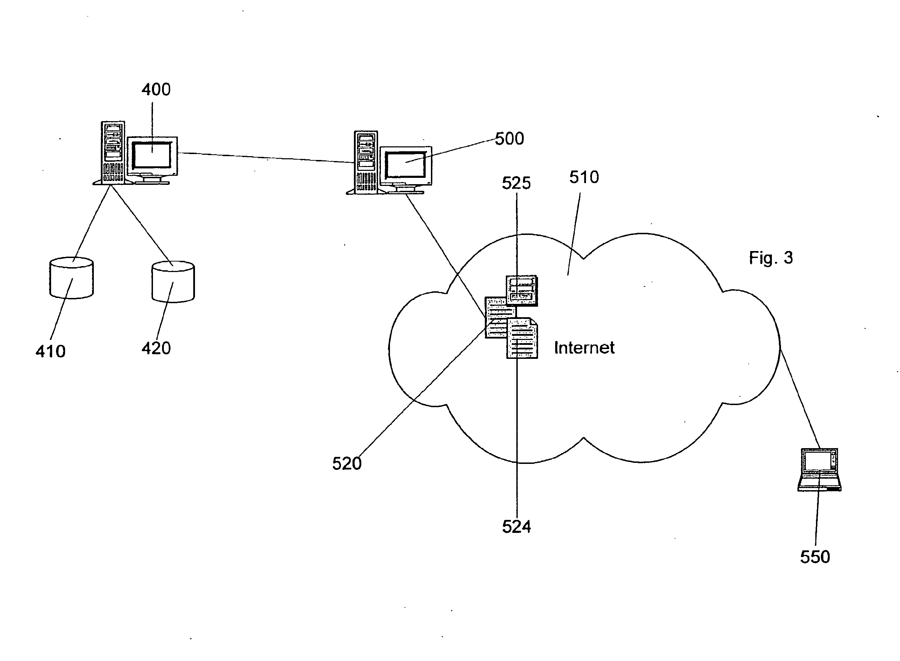

Figure 3 is a schematic diagram of a computer system implementing a data search system according to an embodiment of the present invention.

A database server 400 has a content database 410 holding references to resources on the World Wide Web such as Web sites, pages, presentations, word-processed documents and the like. The database server also has an index database in which each resource in the content database is associated with a number of hierarchical indices in the manner described with reference to Figure 2.

A World Wide Web server 500 is connected to the Internet 510 and hosts a World Wide Web site 520. A user is able to access the World Wide Web site 520 via an Internet access terminal 550 such as a PC running a Web browser.

Upon accessing the World Wide Web site 520, the user is presented with a Web page 524 offering access to a search directory. The Web page 524 includes controls via which the user can navigate the search directory. Each control corresponds to one of the hierarchical indices. In the example of Figure 2, the Web page 524 would include 4 controls, one for each of the indices: subject, location, format and language. Thus, a user may set one of the controls such that the subject is "football".

The search directory is maintained by a database server 400. The database server 400 maintains a content database 410 and an index database 420 that constitute the search database. The index database and content database correspond to the hierarchical indices 210, 230, 250, 270 and the data element references 310a-390a of Figure 2 respectively.

User navigation commands in the form of setting of the controls are accepted via the Web page 524 and submitted to the database server 400. Setting one of the controls has the effect of setting the corresponding index. The database server 400 then processes the content database 410 and returns the references to data elements that satisfy the settings of the indices.

In the above example, setting one of the controls such the subject is "football" causes the subject index 230 to be limited to the football leaf node 235. Thus, only references 340a and 350a are returned to the Web server 500 to be displayed to the user. If another control is set such that location is set to "UK", only reference 350a would be returned. The user may subsequently clear the subject control setting so that references associated with index leaf node "UK" 224 are displayed (references 350a and 390a).

It can be seen that superficially the system operates as a Web directory previously described. However, the search directory is not strictly linear or hierarchical in style as in such Web directories. Instead, the combination of settings from the controls on the Web page that in turn set the indices allow a user to dynamically control the structure and level of detail of the search database.

In one configuration, only references associated with the index leaf node selected may be displayed. Alternatively all references associated with the index leaf node or sub-category (child) leaf nodes may be displayed.

The controls in the Web page 524 could be hypertext links displaying the parent and child categories in the hierarchy and allowing their selection, multi-level menus allowing the direct selection of a category or any other control.

The World Wide Web site 520 may also include a search page 525 that offers access to a search engine run by the World Wide Web server 500. The search page includes a search form allowing the entry of search queries comprising keywords and the selection of a search scope, described in detail below.

The search engine accepts queries via the search page 525 and formats them into an appropriate request. The request is then forwarded to the database server 400 and the search engine awaits the search results.

A search scope is selected by setting a maximum level for some or all of the hierarchical indices that classify the data element references. Data elements that are not referenced at the maximum level or at a sub-level are not included in the search scope. The maximum level corresponds to a leaf node in the relevant hierarchical index. When a search is to be performed on the data elements, only data elements associated with that leaf node or below are searched. Where leaf nodes from a number of the indices are selected, the search is performed only on the common data elements associated with the respective leaf nodes or below (the intersection).

The database server 400 executes the search in dependence of the selected search scope and returns the results in the form of the references to the data elements to the search engine on the World Wide Web server 500. The search engine then controls formats the results as URL (Universal Resource Locator) links and controls the World Wide Web server 500 to display them to the user's Internet access terminal 550 via the World Wide Web site 520.

For example, referring again to the data structure illustrated in Figure 2, a user may visit the Web site 520 and request a search via search page 525. Via the search page 525, the user limits the search scope by requesting only results relating to "sport". The user then requests a keyword search using the keyword "results". The request is forwarded to the database server 400. Because the search scope has been limited, the database server limits the search scope to references to data elements that are associated with the "sport" leaf node 233 of the subject hierarchical index 230 or below. Parsing the subject hierarchical index 230, the database server 400 determines that this restricts the search scope to references 390a (a reference to a general sporting website and therefore associated with the sport leaf node 233), 360a (a cricket document associated with the cricket leaf node 236), 340a and 350a (football web sites associated with the football leaf node 235). The database server 400 runs the keyword search against the references 340a, 350a, 360a and 390a and returns applicable results to the Web server 500 for return to the user in the manner described above.

The number of references in Figure 2 has been limited for ease of explanation but in full operation each leaf node is likely to be associated with a large number of references, potentially tens of thousands or more. It can be envisaged that the applicable results returned from a search such as that performed above run themselves into the thousands or more. However, the user is able to further restrict the search scope by further application of the hierarchical indices 210, 230, 250 or 270. For example, the user may request the results to be further limited such that only references associated with the location "UK" (leaf node 224 of the location hierarchical index 210) are searched. The database server 400 would then determine the common references between the two search scopes and only search those references. In this example this would result in a search using only references 390a and 350a. In addition, the user may decide to further limit the scope of the subjects searched only to "football". This restricts the scope of the subject index 230 to references associated with leaf node 235 and would limit the above example to reference 350a only. Should the user decide that the search is too narrow and potential interesting references have not been searched, one or more of the selected search scopes may be broadened to include higher level nodes via the Web site 520.

Obviously, the implementation of the Web site 520 effects the operation of the data search structure of the present invention. However, the above example shows that the structure provides a powerful classification method that does not require a complex tree hierarchy of other systems and prevents miss-classification or duplication of classification at differing points in the same tree. Whilst the Web site 520 may permit the user to select search scopes from the various indices at the start of the search, in a preferred embodiment of the present invention the Web site 520 permits returned results to be limited by refining the search scope by limitation of further index values. This may involve narrowing of already selected search scopes, selection of new search scopes or broadening of existing search scopes.

Whilst the implementation of the search across multiple indices in the above example uses as an intersection of the data element references associated with all the selected index nodes to determine the search scope, it will be appreciated that a union operation, thus creating a search scope of data element references associated with any of the selected index nodes could also be used. Other such operations to determine the search scope in dependence on the selected index nodes will be apparent to the skilled reader.

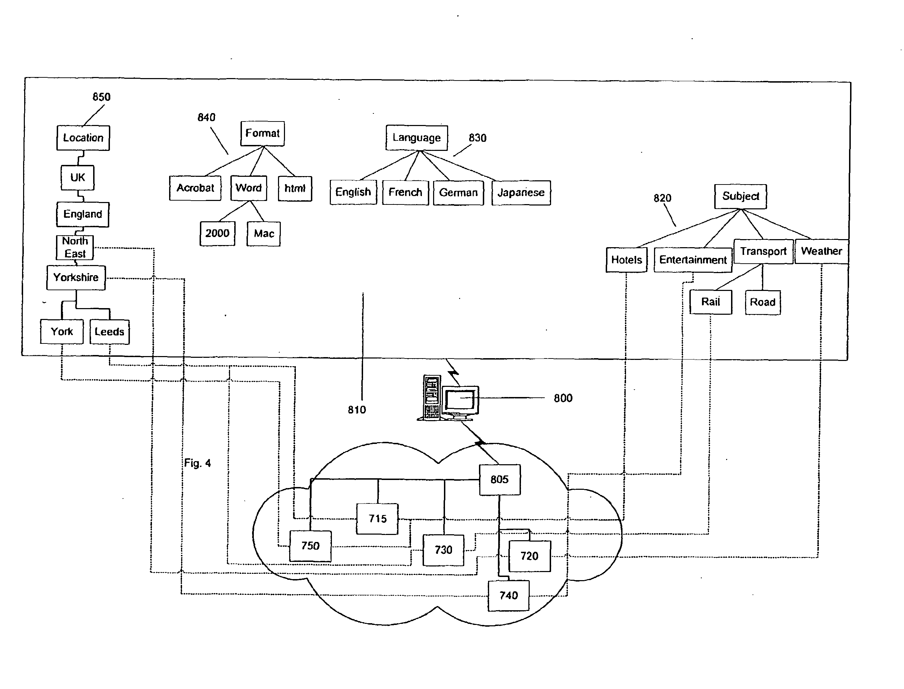

Figure 4 is a schematic diagram of a system according to another embodiment of the present invention that utilises the hierarchy of Figure 2.

For mobile users accessing World Wide Web via WAP, GPRS or some other limited bandwidth medium via a mobile device with limited display and data entry facilities, irrelevant information and excessive navigation is troublesome and to be avoided. Thus, many Web sites now have dedicated subject matter and may be dedicated to a specific geographic area.

It will be appreciated from the above data structure that such sites are particularly suitable for classification, often relating to a particular subject for a particular area and being in a specific language.

For example, a mobile user visiting Leeds in the UK may access a hotel Web site 710 over the Internet 700 using his mobile Internet access device 705. Due to the layout of the web site, the user quickly navigates through sub-pages of UK, England, and Yorkshire (pages not shown) to a specific page 715 on hotels in Leeds. Having located and secured appropriate accommodation through the web site 710, the user wishes to find something to do during the evenings. However, the web site 710 is specific to hotels and is unable to help.

Whilst the Web site 710 may have links to associated sites it would be impossible to cater for every eventuality and keeps the links up to date. Instead, the web site 710 is linked to an intermediate data system 800 according to an aspect of the present invention. The intermediate data system 800 implements the data structure 810 described with reference to Figure 2. The data structure 810 is populated with data on web sites 710-750. References to pages from the Web sites 710-790 are classified as data elements in the appropriate hierarchical indices 820-850 of the data structure 810. The intermediate data system 800 operates a Web site 805 that the owner of another Web site 710-760 can link to. A user browsing specific subjects and/or data on a specific location can access the link to the intermediate data system's Web site 805. From this link the intermediate data system 800 determines the reference to the web page the user was previously browsing and can thus determine its position in the hierarchical index. The intermediate data system processes the position and generates a web page for the user offering links to other pages corresponding to the subject the user was browsing and/or the location.

Thus, the user browsing hotels in Leeds may, for example, be offered links to pages on weather in North East England 720, train timetables for Leeds 730, entertainment on in Yorkshire 740 and hotels in York 750.

Preferably, the link to the intermediate data system's Web site 805 identifies the subject the user was browsing and, if applicable, the location the data related to. The intermediate data system 800 is then able to determine the type of links to offer.

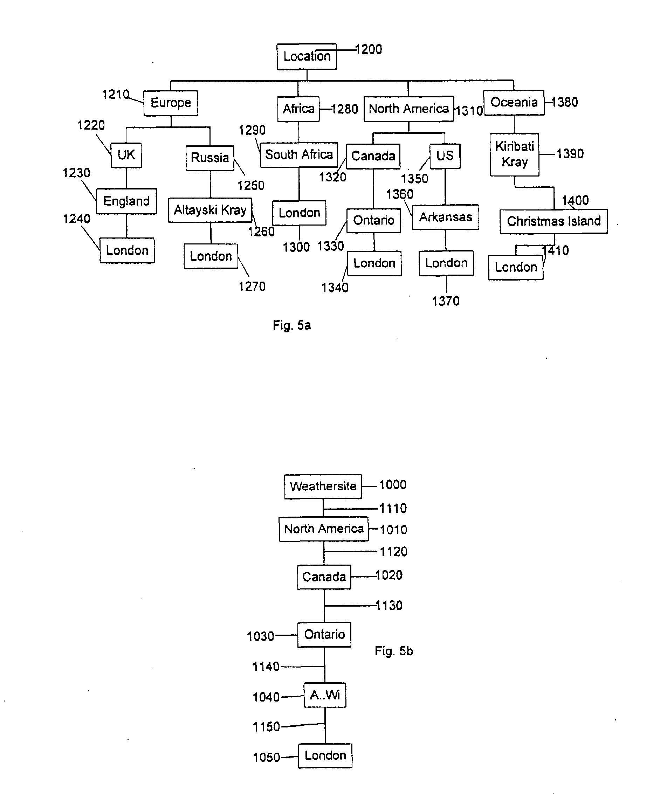

Figures 5a and 5b are schematic diagrams illustrating the operation of a classification system according to another aspect of the present invention.

In order to classify data elements for use in a data structure such as that described above or in a Web directory, an automated classifier is applied to available data.

The automated classifier traverses Web sites and obtains data from the Web sites in an attempt to classify it against an existing data structure.

For example, Web pages 1010-1050 constitute a portion of a Web site 1000, as is illustrated in Figure 5b. The pages are linked by hypertext links 1110-1150. The classifier visits the Web site 1000 and traverses all available hypertext links 1110-1150 to determine the structure of the Web site 1000. The text associated with each hypertext link 1110-1150 that is displayed to the users browsing the Web site 1000 is recorded as a record of the Web site. The record of the Web site 1000 may be "Weathersite"-"North America"-"Canada"-"Ontario"-"A..Wi"-"London". The classifier then attempts to match the record against one or more existing data structures. One of the data structures may be a location index, as has been discussed with reference to Figures 2 to 4 and is illustrated in Figure 5a.

The classifier compares the record with the data structure in order to determine the best match to a portion of the structure. In the example index of Figure 5a it can be seen that branch 1210, 1280 and 1380 match only one link of the record. Branch 1310-1340 matches four links of the record and branch 1310-1370 matches two links. If a match is found that exceeds a set confidence level, for example three links in this example, the record is classified against that branch of the data structure. In the data structure of Figure 2, classification involves generation of a record storing the link to the final page 1050 of the Web site 1000 and associating the record with leaf 1340 of the index.

In a preferred configuration, the classifier is arranged to be context sensitive, only matching records with branches of the data structure if a corresponding node in the branch hierarchy can be found for a record element. For example, the above record would not be matched to branch hierarchy "London"-"Canada"-"Ontario" because "London" is higher in the hierarchy than it is in the record structure relative to "Canada" and "Ontario".

However, the classifier need not be context sensitive and may be configured to match records where the overall number of matches is higher than a predetermined limit, irrespective of positioning in the hierarchy. Such a matching process may be combined with the context sensitive matching process. For example, the results of the two matching processes may be weighted and then compared to a threshold to determine whether a match is found. Some form of heuristic matching may also be applied.

It should furthermore be emphasised that the classification system is not limited to matching end leaf nodes of hierarchical Web sites to a leaf node in a branch hierarchy. The classification system may also be configured to match intermediate leaf nodes in the context of surrounding links and nodes. In the above example of Figures 5a and 5b, not only will "London" link 1050 be matched to "London" node 1340 of the index but "Ontario" link 1030 will be matched to "Ontario" node 1330 and "North America" link 1020 will be matched to "North America" node 1310 in the index. The match of the "Ontario" link 1030 to the "Ontario" 1330 node is due to matches of both its parent 1020 and child 1050 links to nodes 1310 and 1340 in corresponding positions in the hierarchy.

It can be seen that the classifier is applicable to standard directory structures and data structures such as those previously described with reference to Figure 2.

Whilst the classification system has been described with reference to a location example, it is applicable to any subject or subject matter. In a preferred embodiment of the present invention, the classification system is applied to the hierarchical index data structures described with reference to Figure 2. In this embodiment, each record is classified against each hierarchical index data structure.

Whilst the classification system has been described as matching Web pages to hierarchical data structures by means of the text associated with surrounding links, it will be appreciated that the present invention could be applied to the matching of any hierarchically structured data elements by means of data that associates them. For example, the data may be the links between Web pages, the hypertext text used within those links or other attributes of the data elements and their links.

## Claims

1. A data classification method comprising the steps of:
defining a plurality of hierarchical indices;
storing data in a database; and,
linking the stored data in the database to applicable ones of the indices in dependence on characteristics of the data, the link being with a lowest applicable entry within the hierarchical indices.

2. A data classification method according to claim 1, in which each index is a hierarchy of categories and sub-categories.

3. A data classification method according to claim 1 or 2, in which the stored data comprises references to electronic data, the reference including a network identifier for accessing the data.

4. A data classification method according to claim 3, in which the electronic data comprises World Wide Web pages and the reference to the data includes the Web page's Universal Resource Locator, URL.

5. A data classification data structure comprising a database of data items and a plurality of indices having a hierarchy of entries, each data item being linked to the lowest applicable entry within applicable ones of the indices in dependence on characteristics of the data.

6. A data classification data structure according to claim 5, in which each index is a hierarchy of categories and sub-categories.

7. A data classification data structure according to claim 6, including indices corresponding to categories selected from: data subject; content language; data format; and, location associated with the data item.

8. A data classification data structure according to claim 5, 6 or 7, in which the stored data comprises references to electronic data, the reference including a network identifier for accessing the data.

9. A data classification data structure according to claim 8, in which the electronic data comprises World Wide Web pages and the reference to the data includes the Web page's Universal Resource Locator, URL.

10. A computer implemented search engine comprising a server arranged to access a data classification data structure in accordance with any of claims 5 to 8, the server being operative to accept settings for a number of the indices and a search term, wherein the server is arranged to access the data classification structure to generate a set of data references from those in the data classification structure in dependence on the settings of the indices and to execute a search using the search term on the set of data references.

11. A computer implemented search engine according to claim 10, in which the server is arranged to generate the set of data references by determining the intersection of data references associated with each index entry corresponding to its respective index setting.

12. A computer implemented search engine according to claim 11, in which the server is arranged to generate the set of data references by determining the intersection of data references associated with each index entry, or being a child of that index entry, corresponding to its respective index setting.

13. A computer implemented search engine according to claim 10, in which the server is arranged to generate the set of data references by determining the union of data references associated with each index entry corresponding to its respective index setting.

14. A computer implemented search engine according to claim 13, in which the server is arranged to generate the set of data references by determining the union of data references associated with each index entry, or being a child of that index entry, corresponding to its respective index setting.

15. A computer implemented search engine according to any of claims 10 to 14, in which the server is arranged to host a World Wide Web site on the Internet, the World Wide Web site including an interface operative to accept the settings for a number of the indices and the search term, wherein the server is arranged to output the data references as a World Wide Web page.

16. A computer implemented data access system comprising a server arranged to access a data classification structure in accordance with any of claims 5 to 8, the server being operative to accept settings for a number of the indices, wherein the server is arranged to output data references from the data classification structure in dependence on the settings of the indices.

17. A computer implemented data access system according to claim 16, in which the server is arranged to generate the set of data references by determining the intersection of data references associated with each index entry corresponding to its respective index setting.

18. A computer implemented data access system according to claim 17, in which the server is arranged to generate the set of data references by determining the intersection of data references associated with each index entry, or being a child of that index entry, corresponding to its respective index setting.

19. A computer implemented data access system according to claim 16, in which the server is arranged to generate the set of data references by determining the union of data references associated with each index entry corresponding to its respective index setting.

20. A computer implemented data access system according to claim 19, in which the server is arranged to generate the set of data references by determining the union of data references associated with each index entry, or being a child of that index entry, corresponding to its respective index setting.

21. A computer implemented data access system according to any of claims 16 to 20, in which the server is arranged to host a World Wide Web site on the Internet, the World Wide Web site including an interface operative to accept the settings for a number of the indices, wherein the server is arranged to output the data references as a World Wide Web page.

22. An intermediate data serving system linkable to a data access system and having data stored in a data classification structure in accordance with any of claims 5 to 9, wherein upon being accessed by said link, the system is operative to determine characteristics of the data access system and to output selected ones of said data associated with index entries determined as being relevant to said characteristics.

23. An intermediate data serving system according to claim 22, in which characteristics of the data access system include selected ones of: the subject of the data access system; the subject of the data accessed in the data access system prior to accessing of the link; and, a location associated with the data accessed in the data access system.

24. An intermediate data serving system according to claim 22 or 23, in which the data comprises references to electronic data, each reference including a network identifier for accessing the electronic data.

25. A data classification data structure according to claim 24, in which the electronic data comprises World Wide Web pages and the reference to the data includes the Web page's Universal Resource Locator, URL.

26. A method of classifying pages of a Web site to portions of a hierarchical data structure of categories and sub-categories corresponding to said hierarchy, the method comprising the steps of:
traversing the Web site;
recording characteristics of associations between pages of the Web site;
comparing the recorded characteristics with the hierarchical data structure, wherein if a predetermined number of the recorded characteristics for a page and associated pages match a portion of the hierarchical data structure, the page is classified against the portion of the hierarchical data structure.

27. A method according to claim 26, in which associations comprise hypertext links and the characteristics include the text associated with the hypertext links.

28. A method according to claim 26 or 27, in which the comparison is made in dependence on all surrounding pages.

29. A method according to claim 26, 27 or 28 applied to the data classification data structure of claims 5 to 9, in which the comparison is against each index, wherein if a page is classified against an index, a reference to the page is generated and stored and linked to the index entry corresponding to the portion of the hierarchical data structure.

30. A computer program comprising computer program code means for performing all the steps of any of claims 1 to 4 or 26 to 29 when said program is run on a computer.

31. A computer program as claimed in claim 30 embodied on a computer readable medium.
